# FASCICULE DE BREVET EUROPEEN

(11) **EP 2 694 307 B1**
(45) Date de publication et mention de la délivrance du brevet: **01.11.2017**
(21) Numéro de dépôt: 12714808.8
(22) Date de dépôt: 19.03.2012
(51) Int. Cl.: B62D 65/06

(54) **DISPOSITIF DE CALAGE POUR LA POSE D'UN VITRAGE SUR UNE BAIE DE CARROSSERIE D'UN VEHICULE**
VERKEILUNGSVORRICHTUNG ZUM ANBAUEN EINES WINDSCHUTZSCHEIBES EINER KRAFTFAHRZEUG KAROSSERIE
ADJUSTEMENT DEVICE FOR MOUNTING THE WINDSHIELD GLASS ON THE VEHICLE BODY

(30) Priorité: 01.04.2011 FR 1152812
(43) Date de publication de la demande: 12.02.2014
(73) Titulaire: PSA Automobiles SA, 78300 Poissy (FR)
(72) Inventeur: BUSSON, Yvan, F-25200 Montbeliard (FR)
(74) Mandataire: Fosse, Danièle
(86) Numéro de dépôt international: PCT/FR2012/050568
(87) Numéro de publication internationale: WO 2012/131220

(56) Documents cités:
- EP-A2- 1 036 684
- EP-A2- 2 042 361
- FR-A1- 2 760 696
- FR-A1- 2 952 900

## Description

L'invention concerne un dispositif de calage pour la pose d'un vitrage sur une baie de carrosserie d'un véhicule, un ensemble équipé de ce dispositif et un véhicule automobile équipé de cet ensemble.

Lors de la production industrialisée d'un véhicule automobile, il est recouru à des opérations de pose de vitrages sur des baies de carrosserie. Une baie de carrosserie présente la forme d'un cadre constitué de quatre montants. Chaque montant comprend des parois frontale et latérale formant un angle.

Préalablement à l'opération de pose, le vitrage est équipé d'un joint d'étanchéité sur l'ensemble de son pourtour. Par exemple, l'équipement d'un vitrage avec un joint d'étanchéité est décrit dans la demande de brevet FR9703121.

Le joint d'étanchéité décrit dans le document précité comprend une lèvre destinée à être pincée entre le vitrage et une paroi latérale d'un des montants de la baie de carrosserie. Le joint d'étanchéité comprend par ailleurs, sur sa portion tournée vers la paroi frontale de la baie, une protubérance destinée à prendre appui contre cette face frontale.

Le joint d'étanchéité est typiquement collé sur le vitrage. A cet effet, une première bande adhésive double face est disposée entre le joint d'étanchéité et le vitrage. En outre, une seconde bande adhésive est disposée entre le joint d'étanchéité et les parois frontales des montants de la baie de carrosserie dans le but de coller le joint d'étanchéité à celle-ci.

Le vitrage ainsi équipé est manipulé par un robot pourvu d'un préhenseur à ventouses. Lorsque le vitrage est saisi par le préhenseur et suspendu dans le vide, le vitrage tend à s'affaisser sous son propre poids, entraînant alors l'apparition d'un galbe. Par « apparition d'un galbe » on entend l'apparition d'un rayon de courbure sur le vitrage distinct d'un rayon de courbure nominal de ce vitrage.

Le vitrage est, en premier lieu, posé contre les parois frontales de la baie, en position galbée. En second lieu, le robot exerce, par le biais du préhenseur, une force de pression sur le vitrage, dans une direction perpendiculaire aux parois frontales de la baie, de manière à dégalber le vitrage. Le vitrage occupe alors sa position finale dans la baie de carrosserie et les bandes adhésives solidarisent le vitrage et la baie.

Un inconvénient inhérent à la pose d'un vitrage équipé tel que décrit dans le document précité est que lors du dégalbage du vitrage, le joint d'étanchéité est étiré perpendiculairement à la direction de la force exercée par le préhenseur. Aussi, le dégalbage du verre contraint mécaniquement le joint d'étanchéité ce qui entraîne la dégradation de son aspect final.

En outre, l'étirement du joint d'étanchéité entraîne l'exercice de contraintes mécaniques sur les bandes adhésives. Ces contraintes mécaniques peuvent conduire au décollement du joint d'étanchéité du vitrage et/ou de la baie de carrosserie.

Un autre dispositif de calage conforme au préambule de la revendication 1 est connu du document EP2042361 A2. L'invention vise en conséquence à fournir un dispositif de calage permettant de pallier ces inconvénients.

L'invention concerne ainsi un dispositif de calage pour la pose d'un vitrage sur une baie de carrosserie d'un véhicule tel que décrit par la revendication 1.

Le dispositif est avantageux en ce que lors du dégalbage du vitrage lors de sa pose, la tête pivote autour de l'axe de pivotement de manière à limiter les contraintes mécaniques exercées par le vitrage sur le joint. Dans ces conditions, les contraintes mécaniques sont concentrées sur le dispositif, et non plus sur le joint d'étanchéité. Ainsi, l'étirement du joint d'étanchéité est limité, et l'aspect final du joint est amélioré.

En outre, les contraintes mécaniques exercées sur les éléments de collage disposés entre le joint d'étanchéité et le vitrage sont limitées, réduisant par la même le risque de décollement du joint d'étanchéité du vitrage.

L'invention peut comporter une ou plusieurs des caractéristiques suivantes.

Dans une forme d'exécution préférée le pied, la portion raccordement et la tête sont réalisés d'un seul tenant en un matériau élastiquement déformable.

Dans ces conditions, lors du dégalbage la tête pivote autour de l'axe de pivotement par déformation élastique du dispositif.

Avantageusement, la portion de raccordement présente, au moins localement, une épaisseur inférieure ou égale à la plus petite épaisseur de la tête, les épaisseurs étant mesurées dans des directions perpendiculaires à un plan longitudinal du dispositif.

Dans ces conditions, le pivotement de la tête autour de l'axe de pivotement par déformation élastique est facilité.

Dans une forme d'exécution préférée, l'épaisseur de la tête va en s'accroissant depuis la portion de raccordement vers la face destinée à prendre appui contre la baie de carrosserie.

Une telle conformation du dispositif permet de maximiser l'amplitude de pivotement de la tête par rapport au pied avant que la tête ne vienne en butée contre le joint d'étanchéité ou un élément placé entre la tête et le joint d'étanchéité.

La face de la tête destinée à prendre appui contre la baie de carrosserie est avantageusement convexe, et de préférence courbée.

Dans une forme d'exécution préférée, la section transversale du pied présente un profil en 'T'.

Il est envisagé que le dispositif comporte au moins une aile faisant saillie sur la portion de raccordement et destinée à prendre appui contre une face du joint d'étanchéité tournée vers la baie de carrosserie.

Dans une forme d'exécution, le dispositif est réalisé en un élastomère tel que de l'EPDM (éthylène-propylène-diène monomère).

L'invention concerne également un ensemble pour la pose d'un vitrage sur une baie de carrosserie d'un véhicule comportant :
- un dispositif de calage tel que présenté plus haut, et
- un joint d'étanchéité sur lequel le dispositif est monté.

L'invention concerne enfin un véhicule automobile comportant :
- une baie de carrosserie,
- au moins un vitrage posé sur cette baie de carrosserie, et
- un ensemble tel que présenté plus haut.

L'invention sera mieux comprise à l'aide de la description qui suit en référence au dessin schématique annexé représentant, à titre d'exemple non limitatif, un dispositif de calage pour la pose d'un vitrage sur un véhicule automobile selon l'invention:
- Figure 1 est une illustration schématique d'un véhicule automobile équipé d'un dispositif de calage selon l'invention;
- figure 2 est une première vue partielle d'un ensemble équipant le véhicule de la figure 1 ;
- figure 3 est une seconde vue partielle de l'ensemble de la figure 2;
- figure 4 est une vue en perspective d'un dispositif de calage équipant l'ensemble des figures 2 et 3; et
- figure 5 est une vue en perspective du dispositif de calage de la figure 4 monté sur un joint d'étanchéité.

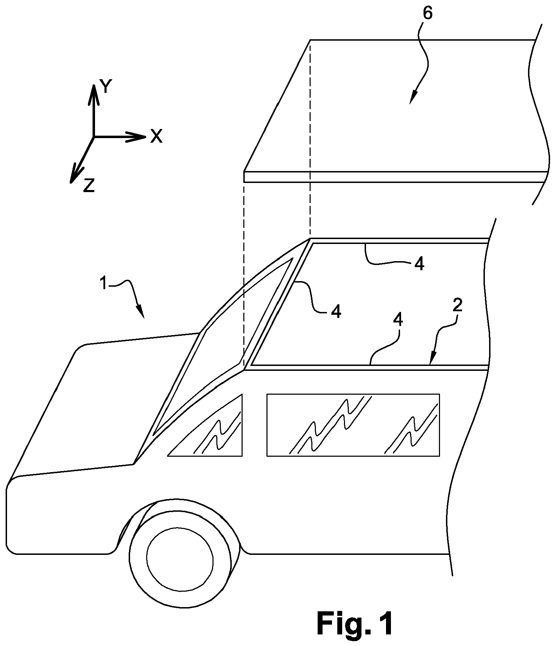

Les figures 1 à 5 sont orientées dans un même repère orthogonal formé par des directions x, y et z.

La figure 1 illustre un véhicule 1 tel qu'un véhicule automobile. Ce véhicule 1 comprend une baie 2 de carrosserie constituée de montants 4 formant un cadre sur laquelle est posé un vitrage 6. Dans la forme d'exécution représentée, le vitrage 6 est un pavillon vitré.

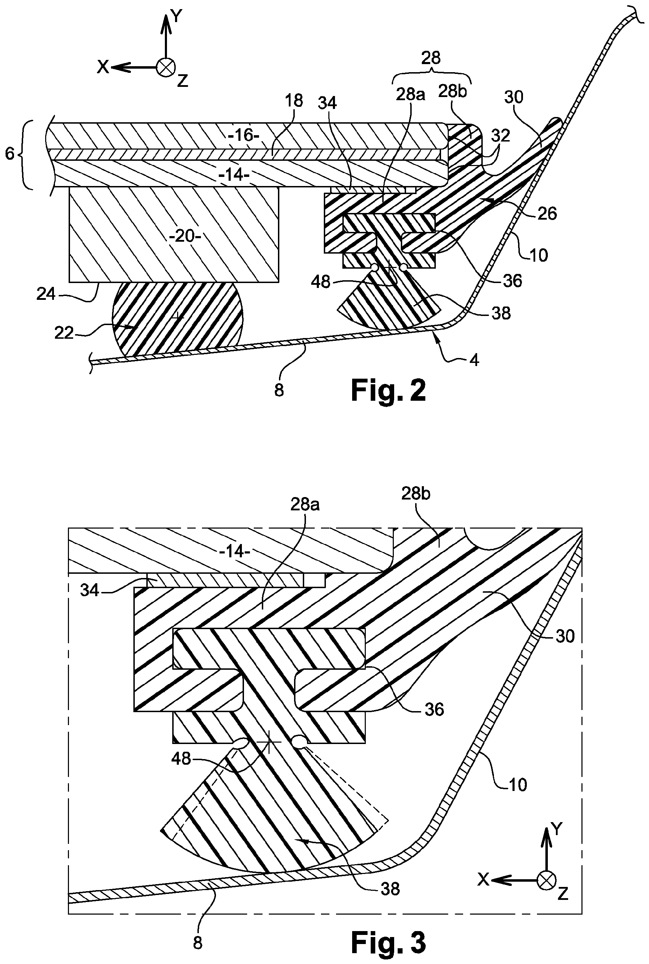

L'agencement du vitrage 6 sur les montants 4 est plus visible sur la figure 2. Sur cette figure 2, seul un montant 4 est représenté. Le montant 4 comprend des paroi frontale 8 et latérale 10. Ces parois frontale 8 et latérale 10 forment un angle sensiblement égal à 45°.

Le vitrage 6 est ici feuilleté. Aussi, le vitrage 4 comprend un feuillet 14 tourné vers la paroi frontale 8, un feuillet 16 tourné vers l'extérieur du véhicule 1, et un film 18 disposé entre les feuillets 14 et 16. Typiquement, les feuillets 14 et 16 sont en verre ou analogue, et le film 18 est en matière synthétique.

Une pièce 20 en polyuréthane est extrudée sur le feuillet 14. Un joint de colle 22 est déposé sur une face 24 de cette pièce 20 tournée vers la paroi frontale 8.

Un joint d'étanchéité 26 s'étend sur le pourtour du vitrage 4. Le joint d'étanchéité 26 est formé d'un talon 28 et d'une lèvre 30 souple . Le talon 28 comprend une portion 28a prenant appui contre le feuillet 14 et une portion 28b prenant appui contre un chant 32 du vitrage 6. La lèvre 30 fait saillie sur le talon 28 et prend appui contre la paroi latérale 10.

Le joint d'étanchéité 26 est typiquement réalisé en un élastomère, tel qu'un TPE (pour élastomère thermoplastique). A titre d'exemple, le talon 28 est réalisé en un TPE de dureté Shore sensiblement égale à 85 et la lèvre 30 est réalisée en un TPE de dureté Shore sensiblement égale à 65.

Le joint d'étanchéité 26 est collé au vitrage par le biais d'une bande 34 adhésive double face, ou analogue, disposée entre la portion 28a et le feuillet 14.

Le joint d'étanchéité 26 est pourvu d'une rainure 36 formée dans la portion 28a et s'étendant majoritairement selon la direction z. Dans la forme d'exécution représentée, la rainure 36 forme un évidement cylindrique dont la section transversale présente un profil en 'T'.

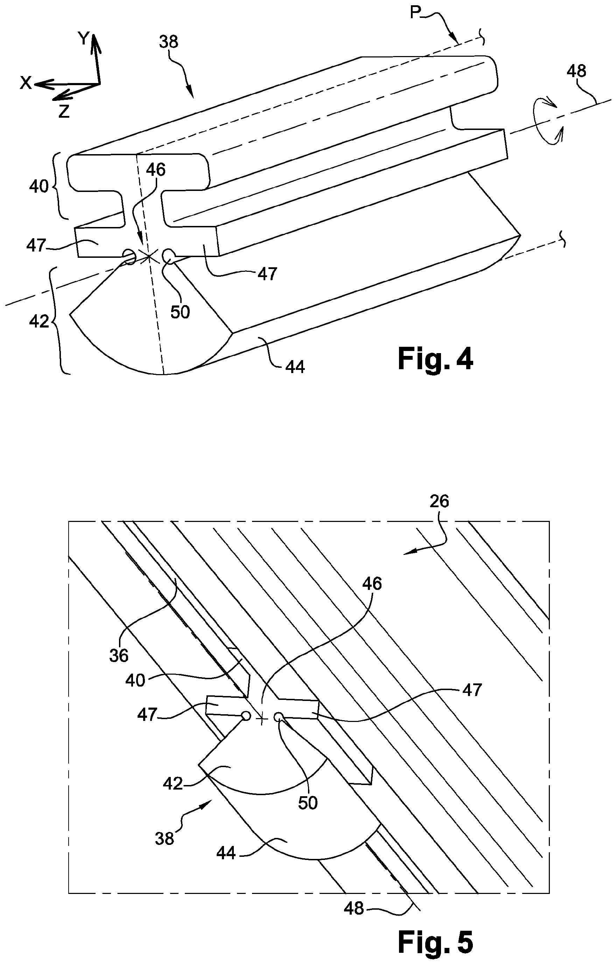

Le joint d'étanchéité 26 repose sur un dispositif 38 de calage réalisé en un matériau élastiquement déformable tel que de l'EPDM (pour éthylène-propylène-diène monomère). Le dispositif 38 est plus visible sur les figures 4 et 5.

Le dispositif 38 est ici cylindrique. Celui-ci s'étend majoritairement selon un axe parallèle à la direction z. A titre d'exemple, dans la forme d'exécution illustrée, la longueur du dispositif 38, mesurée selon la direction z, est comprise entre 25mm et 30mm.

Par la suite, on désigne par « plan longitudinal P» du dispositif 38 un plan parallèle aux directions y et z et formant un plan de symétrie pour ce dispositif 38. Le dispositif 38 comprend :
- un pied 40 encastré dans la rainure 36 ;
- une tête 42 dont une face 44 prend appui contre la paroi frontale 8;
- une portion 46 de raccordement raccordant le pied 40 à la tête 42 ; et
- deux ailes 47 faisant saillie sur la portion 46 de raccordement, s'étendant sensiblement parallèlement aux directions x et z, chaque aile 47 prenant appui contre une face du joint d'étanchéité 26 tournée vers la paroi 8.

Deux gorges 50, s'étendant parallèlement à la direction z, sont ménagées à la jonction de la portion 46 de raccordement et de la tête 42 de manière à minimiser localement l'épaisseur de la portion 46 de raccordement. Ici, les gorges 50 ont une section circulaire. Dans cette description, les épaisseurs de la portion 46 et de la tête 42 sont mesurées selon une direction parallèle à la direction x.

La portion 46 de raccordement présente ainsi localement une épaisseur inférieure à la plus petite épaisseur de la tête 42. Dans ces conditions, la tête 42 est apte à pivoter par rapport au pied 40, par déformation élastique, autour d'un axe de pivotement 48 passant par la portion 46 et parallèle à la direction z. Deux positions du dispositif 38 sont illustrées sur la figure 3. Une première position en trait plein et une seconde position en trait pointillé.

Dans la forme d'exécution représentée, la section transversale du pied 40 présente un profil en 'T' sensiblement identique à celui de la rainure 36, de manière à permettre l'encastrement du pied 40 à l'intérieur de cette rainure 36.

La tête 42 est une portion de cylindre droit. La face 44 est une face convexe courbée. L'épaisseur de la tête 42 va en s'accroissant depuis la portion 46 de raccordement vers la face 44.

Typiquement, des dispositifs 38 sont montés à intervalle régulier dans les rainures 36 sur tout le pourtour du vitrage 6. Deux dispositifs 38 adjacents sont par exemple distants l'un de l'autre de 40cm.

L'invention n'est pas limitée à la seule forme d'exécution qui vient d'être décrite et englobe les variantes de celle-ci, qui sont décrites dans les revendications ci-jointes.

## Revendications

1. Dispositif (38) de calage pour la pose d'un vitrage sur une baie (4) de carrosserie d'un véhicule (1), comprenant au moins un pied (40) destiné à être monté sur un joint (26) d'étanchéité, et une portion (46) de raccordement raccordant le pied (40) à au moins une tête (42), la tête (42) présentant une face (44) destinée à prendre appui contre la baie (4) de carrosserie, le dispositif (38) étant conçu de sorte que sous l'effet d'une contrainte mécanique appliquée sur le dispositif (38) lors de la pose du vitrage, la tête (42) puisse pivoter autour d'un axe de pivotement (48) de manière à limiter les contraintes mécaniques exercées sur le joint d'étanchéité (26), la portion (46) de raccordement présentant, au moins localement, une épaisseur inférieure ou égale à la plus petite épaisseur de la tête (42), et ce dispositif de calage étant **caractérisé en ce que** lesdites épaisseurs sont mesurées dans des directions perpendiculaires à un plan longitudinal (P) du dispositif (38) et l'épaisseur de la tête (42) va en s'accroissant depuis la portion (46) de raccordement vers la face (44) destinée à prendre appui contre la baie (4) de carrosserie.

2. Dispositif (38) de calage selon la revendication 1, dans lequel le pied, la portion (46) de raccordement et la tête (42) sont réalisés d'un seul tenant en un matériau élastiquement déformable.

3. Dispositif (38) de calage selon l'une quelconque des revendications précédentes, dans lequel la face (44) de la tête destinée à prendre appui contre la baie (4) de carrosserie est convexe, et de préférence courbée.

4. Dispositif (38) de calage selon l'une des revendications précédentes **caractérisé en ce que** deux gorges (50) sont ménagées à la jonction de la portion (46) de raccordement et de la tête (42) de manière à minimiser localement l'épaisseur de la portion (46) de raccordement.

5. Dispositif (38) de calage selon l'une quelconque des revendications précédentes, dans lequel la section transversale du pied (40) présente un profil en 'T'.

6. Dispositif (38) de calage selon l'une quelconque des revendications précédentes, dans lequel le dispositif (38) comporte au moins une aile (47) faisant saillie sur la portion (46) de raccordement et destinée à prendre appui contre une face du joint d'étanchéité (26) tournée vers la baie de carrosserie.

7. Dispositif (38) de calage selon l'une quelconque des revendications précédentes, dans lequel le dispositif (38) est réalisé en un élastomère tel que de l'EPDM (éthylène-propylène-diène monomère).

8. Ensemble pour la pose d'un vitrage sur une baie de carrosserie d'un véhicule comportant :
- un dispositif (38) selon l'une quelconque des revendications précédentes, et
- un joint (26) d'étanchéité sur lequel le dispositif (38) est monté.

9. Véhicule (1) automobile comportant :
- une baie (2) de carrosserie,
- au moins un vitrage (6) posé sur cette baie (2) de carrosserie, et
- un ensemble selon la revendication 8.

## Patentansprüche

1. Verkeilungsvorrichtung (38) zum Anbauen einer Verglasung auf einer Karosserieöffnung (4) eines Fahrzeugs (1), die mindestens einen Ständer (40) umfasst, der dazu bestimmt ist, auf eine Dichtung (26) montiert zu werden, und einen Verbindungsabschnitt (46), der den Ständer (40) mit mindestens einem Kopf (42) verbindet, wobei der Kopf (42) eine Seite (44) aufweist, die dazu bestimmt ist, sich auf die Karosserieöffnung (4) zu stützen, wobei die Vorrichtung (38) derart konzipiert ist, dass unter der Einwirkung einer mechanischen Belastung, die auf die Vorrichtung (38) bei dem Anbauen der Verglasung angelegt wird, der Kopf (42) um eine Schwenkachse (48) derart schenken kann, dass die mechanischen Belastungen, die auf die Dichtung (26) ausgeübt werden, begrenzt werden, wobei der Verbindungsabschnitt (46) mindestens stellenweise eine Stärke kleiner oder gleich der kleinsten Stärke des Kopfs (42) aufweist, und diese Verkeilungsvorrichtung **dadurch gekennzeichnet ist, dass** die Stärken in Richtungen senkrecht zu einer Längsebene (P) der Vorrichtung (38) gemessen werden, und dass die Stärke des Kopfs (42) von dem Verbindungsabschnitt (46) zu der Seite (44), die dazu bestimmt ist, sich auf die Karosserieöffnung (4) zu stützen, zunimmt.

2. Verkeilungsvorrichtung (38) nach Anspruch 1, wobei der Ständer, der Verbindungsabschnitt (46) und der Kopf (42) aus einem Stück aus einem elastisch verformbaren Werkstoff hergestellt sind.

3. Verkeilungsvorrichtung (38) nach einem der vorhergehenden Ansprüche, wobei die Seite (44) des Kopfs, die dazu bestimmt ist, sich auf die Karosserieöffnung (4) zu stützen, konvex und bevorzugt gewölbt ist.

4. Verkeilungsvorrichtung (38) nach einem der vorhergehenden Ansprüche, **dadurch gekennzeichnet, dass** zwei Nuten (50) an der Vereinigung des Verbindungsabschnitts (46) und des Kopfs (42) derart eingerichtet sind, dass die Stärke des Verbindungsabschnitts (46) stellenweise minimiert ist.

5. Verkeilungsvorrichtung (38) nach einem der vorhergehenden Ansprüche, wobei der Querschnitt des Ständers (40) ein "T"-Profil aufweist.

6. Verkeilungsvorrichtung (38) nach einem der vorhergehenden Ansprüche, wobei die Vorrichtung (38) mindestens eine Rippe (47) umfasst, die auf dem Verbindungsabschnitt (46) vorsteht und dazu bestimmt ist, sich auf eine Seite der Dichtung (26), die zu der Karosserieöffnung gerichtet ist, zu stützen.

7. Verkeilungsvorrichtung (38) nach einem der vorhergehenden Ansprüche, wobei die Vorrichtung (38) aus einem Elastomer, wie zum Beispiel aus EPDM (Ethylen-Propylen-Dien-Monomer) hergestellt ist.

8. Baugruppe zum Anbauen einer Verglasung auf eine Karosserieöffnung eines Fahrzeugs, umfassend:
- eine Vorrichtung (38) nach einem der vorhergehenden Ansprüche, und
- eine Dichtung (26), auf die die Vorrichtung (38) montiert ist.

9. Kraftfahrzeug (1), umfassend:
- eine Karosserieöffnung (2),
- mindestens eine Verglasung (6), die auf dieser Karosserieöffnung (2) angebaut ist, und
- eine Baugruppe nach Anspruch 8.

## Claims

1. An adjustment device (38) for mounting a glazing on an opening (4) of the body of a vehicle (1), including at least one foot (40) intended to be mounted on a seal (26), and a connecting portion (46) connecting the foot (40) to at least one head (42), the head (42) having a face (44) intended to rest against the opening (4) of the body, the device (38) being designed such that under the effect of a mechanical stress applied to the device (38) during the mounting of the glazing, the head (42) can pivot about a pivoting axis (48) so as to limit the mechanical stresses exerted on the seal (26), the connecting portion (46) having, at least locally, a thickness less than or equal to the smallest thickness of the head (42), and this adjustment device being **characterized in that** said thicknesses are measured in directions perpendicular to a longitudinal plane (P) of the device (38) and the thickness of the head (42) increases from the connecting portion (46) towards the face (44) intended to rest against the opening (4) of the body.

2. The adjustment device (38) according to Claim 1, in which the foot, the connecting portion (46) and the head (42) are made in one piece from an elastically deformable material.

3. The adjustment device (38) according to any one of the preceding claims, in which the face (44) of the head intended to rest against the opening (4) of the body is convex, and preferably curved.

4. The adjustment device (38) according to one of the preceding claims, **characterized in that** two grooves (50) are arranged at the junction of the connecting portion (46) and of the head (42) so as to minimize locally the thickness of the connecting portion (46).

5. The adjustment device (38) according to any one of the preceding claims, in which the cross-section of the foot (40) has a T-shaped profile.

6. The adjustment device (38) according to any one of the preceding claims, in which the device (38) comprises at least one wing (47) projecting over the connecting portion (46) and intended to rest against a face of the seal (26) turned towards the opening of the body.

7. The adjustment device (38) according to any one of the preceding claims, in which the device (38) is made from an elastomer such as EPDM (ethylene propylene diene monomer).

8. An assembly for mounting a glazing on an opening of the body of a vehicle, comprising:
- a device (38) according to any one of the preceding claims, and
- a seal (26) on which the device (38) is mounted.

9. A motor vehicle (1) comprising:
- an opening (2) of the body,
- at least one glazing (6) mounted on this opening (2) of the body, and
- an assembly according to Claim 8.
